**Europäisches Patentamt**

**European Patent Office**

**Office européen des brevets**

(19)

(11) Veröffentlichungsnummer : **0 318 752 B1**

(12) **EUROPÄISCHE PATENTSCHRIFT**

(45) Veröffentlichungstag der Patentschrift :
**07.06.95 Patentblatt 95/23**

(51) Int. Cl.⁶ : **G01N 21/39, G01N 21/35**

(21) Anmeldenummer : **88118969.0**

(22) Anmeldetag : **14.11.88**

(54) **System zur Spuren- Gasanalyse.**

(30) Priorität : **03.12.87 DE 3741026**

(43) Veröffentlichungstag der Anmeldung :
**07.06.89 Patentblatt 89/23**

(45) Bekanntmachung des Hinweises auf die
Patenterteilung :
**07.06.95 Patentblatt 95/23**

(84) Benannte Vertragsstaaten :
**AT BE CH DE ES FR GB GR IT LI NL SE**

(56) Entgegenhaltungen :
EP-A- 0 084 726
GB-A- 2 127 537
US-A- 4 386 854
SOVIET JOURNAL OF QUANTUM ELECTRONICS, Band 17, Nr. 9, September 1987, Sei-
ten1224-1226, American Institute of Physics,
New York, US; V.V. BEREZOVSKII et al.:
"Laser diagnostics of the ammonia pollutant
in the atmosphere form an aircraft"

(56) Entgegenhaltungen :
APPLIED PHYSICS B. PHOTOPHYSICS AND
LASER CHEMISTRY, Band B40, Nr. 1, Mai
1986,Seiten 29-33, Springer-Verlag, Heidelberg, DE; H. MOOSMÜLLER: "Determination
ofgas concentrations and temperature in the
exhaust of a power plant with a CWchemical
HF laser"
PATENT ABSTRACTS OF JAPAN, Band 5, Nr.
115 (P-72)[787], 24. Juli 1981; & JP-A-56 55 839
APPLIED PHYSICS LETTERS, Band 47, Nr. 12,
Dezember 1985, Seiten 1241-1243,American
Institute of Physics, Woodburry, New York,
US; S. SIMHONY et al.:"Remote monitoring of
ammonia using a CO2 laser and infrared fibers"
APPLIED OPTICS, Band 22, Nr. 4, Juli 1983,
Seiten 2221-2223, Optical Society ofAmerica,
New York, US; P. POKROWSKY: "Absorption
of H2S at DF laserwavelengths"

(73) Patentinhaber : **TECHFORM ENGINEERING
AG**
Hardhofstrasse 15
CH-8424 Embrach (CH)

(72) Erfinder : **Wolfrum, Jürgen, Prof. Dr.**
Südring 2
D-3405 Rosdorf 2-Obernjesa (DE)
Erfinder : **Neckel, Hartmut, Dipl.-Phys.**
Wundtstrasse 31
D-6900 Heidelberg (DE)

(74) Vertreter : **Popp, Eugen, Dr. et al**
MEISSNER, BOLTE & PARTNER
Widenmayerstrasse 48
D-80538 München (DE)

## Beschreibung

Die Erfindung betrifft ein System zur Messung der Ammoniak-Konzentration nach dem Oberbegriff des Patentanspruchs 1.

Aus der Literatur (SOVIET JOURNAL OF QUANTUM ELECTRONICS, Band 17 Nr. 9, September (1987) Seiten 1224-1226) ist es bekannt, daß man eine Spuren-Gasanalyse durchführen kann, bei der die Absorption des Ausgangsstrahls eines Lasers durch das nachzuweisende Gas im Bereich eines Absorptionsmaximums des Gases gemessen und mit einem Bezugswert verglichen wird. Hierzu wird die Ausgangswellenlänge eines Lasers sich zyklisch wiederholend zwischen zwei einstellbaren Wellenlängen hin- und hergeschaltet. Die eine Wellenlänge stimmt mit einem Absorptionsmaximum des nachzuweisenden Gases im wesentlichen überein, während die andere Wellenlänge bei einem Absorptionsminimum des nachzuweisenden Gases liegt. Die Abschwächungen des Laserstrahls bei den beiden Wellenlängen werden bestimmt, so daß man die maximale Abschwächung auf die minimale Abschwächung normieren und daraus die Extinktion und die Konzentration des absorbierenden Gases als Meßergebnis herleiten kann. Diese Meßmethode findet auch bei dem aus der GB-A-217 537 bekannten System Anwendung, das eine Laser-Emittereinheit zum Erzeugen eines Ausgangsstrahls, erste optische Mittel zum Leiten des Ausgangsstrahls in eine Meßstrecke, in der sich zu analysierendes Gas befindet, zweite optische Mittel zum Leiten des aus der Meßstrecke austretenden Meßstrahls in ein Meßorgan zur Messung der Intensität des Meßstrahls, eine Auswertschaltung zum Verarbeiten und Auswerten von Ausgangssignalen des Meßorgans und zum Anzeigen/Registrieren von Meßwerten aufweist, wobei die Laser-Emittereinheit einen abstimmbaren $CO_2$-Laser umfaßt, dessen Ausgangsstrahl-Wellenlänge über eine Steuerung bzw. einen von ihr angesteuerten verstellbaren Spiegel, ein Gitter oder dergleichen zwischen mindestens zwei Werten zyklisch sich wiederholend hin- und herschaltbar ist, wobei eine der Wellenlängen einem Absorptionsmaximum und eine der Wellenlängen einem Absorptionsminimum an Ammoniak entspricht. Die dort vorgesehene Auswertschaltung ist weiterhin derart ausgebildet, daß die Ausgangswerte (E) und (K) angezeigt/registriert werden, die ein Maß für das Verhältnis (Al/Bl) der Intensitäten bei den verschiedenen Wellenlängen bzw. der Konzentration von Ammoniak nach Durchlaufen der Meßstrecke sind.

Der Erfindung liegt die Aufgabe zugrunde, ein System der eingangs genannten Art dahingehend weiterzubilden, daß eine große Genauigkeit der Meßergebnisse erhalten wird.

Diese Aufgabe wird dadurch gelöst, daß die Auswertschaltung Sample & Hold-Schaltungen umfaßt, die mit der Steuerung für den verstellbaren Spiegel, das Gitter oder dergleichen sowie gegebenenfalls einem Chopper zum Unterbrechen des Ausgangsstrahls synchronisiert sind und die Ausgangssignale des Meßorgans über definierte Zeitintervalle nach Abklingen von Einschwingvorgängen abtastet.

Durch die Abtastung der Meßwandler zu bestimmten Zeiten werden einerseits nur sehr kurze Zeitabschnitte betrachtet, diese Zeitabschnitte werden aber so gelegt, daß Einflüsse von Einschwingvorgängen ausgeschaltet werden.

Von besonderem Vorteil ist es, wenn man, vorzugsweise gleichzeitig mit der Intensitätsmessung des Laserstrahls nach Durchlaufen der Meßstrecke, eine Messung der Intensität des Laserstrahls vor der Meßstrecke vornimmt, wobei das Verhältnis der Intensitäten bei den beiden Wellenlängen und nicht deren Absolutbeträge gemessen werden müssen. Auf dieses Verhältnis wird dann das Verhältnis der Laserstrahlintensitäten nach Durchlaufen der Meßstrecken normiert (Multiplikation mit dem Kehrwert). Mit dem so ausgebildeten System gelangt man zu einer stabilen Absolutwertmessung, ohne daß hierzu die Absolutwerte der Laserstrahlenergie bekannt sein müßten.

Bei einer besonders bevorzugten Ausführungsform der Erfindung, wird ein $^{13}CO_2$-Laser verwendet, der zwischen den ihm eigenen Linien R(16) und R(18) durch Verschiebung eines seiner Spiegel bzw. Gitter hin- und hergeschaltet wird, wobei man mit dem so ausgebildeten System $NH_3$ mit hoher Präzision und hoher Nachweisempfindlichkeit detektieren kann. Bei einem Versuch wurde eine Nachweisempfindlichkeit von 1 ppm · m erzielt. Die R(16)-Linie des $^{13}CO_2$-Laser liegt nämlich in einem Absorptionsminimum, die R(18)-Linie dieses Lasers in einem Absorptionsmaximum von Ammoniak. Wendet man das System zur Rauchgasanalyse in einem Kraftwerk an, so kann man aufgrund der hohen Leistung des Lasers direkt im Rauchgaskanal messen, und über das Meßergebnis (Ammoniak-Konzentration im Rauchgas) z.B. die Güte einer Entstickungsanlage bzw. der Verbrennung überwachen. Sehr vorteilhaft ist hierbei, daß keinerlei Querempfindlichkeiten vorliegen, da der Wasserdampf oder auch $CO_2$ im untersuchten Bereich eine gleichmäßige Absorption aufweisen.

Außerdem erlaubt die Methode eine Analyse der Gaskonzentration bei variablen und sehr hohen Gastemperaturen (bis 500°C).

Bevorzugte Ausführungsformen der Erfindung werden nachfolgend anhand von Abbildungen näher beschrieben. Hierbei zeigen:

Fig. 1          ein Blockschaltbild einer bevorzugten Ausführungsform des erfindungsgemäßen Systems;

Fig. 2 bis 4      Zeitdiagramme zur Erläuterung der Wirkungsweise des Systems;

Fig. 5      eine graphische Darstellung zur Erläuterung der NH3-Absorption und der Meßwellenlängen;

Fig. 6      ein Diagramm zur Erläuterung der NH3-Linienstärken;

Fig. 7      ein Diagramm zur Erläuterung der NH3-Absorptionslinien im Vergleich zu Emissionslinien verschiedener $CO_2$-Laser;

Fig. 8      ein Diagramm zur Erläuterung der Druckabhängigkeit des Meßergebnisses;

Fig. 9      ein Diagramm zur Erläuterung der Konzentrationsabhängigkeit des Meßergebnisses;

Fig. 10      ein detaillierteres Blockschaltbild zur Darstellung der Meßergebnis-Auswertung;

Fig. 11      eine schematisierte Schnittdarstellung einer Spiegelanordnung für die Meßstrecke; und

Fig. 12      eine schematisierte Darstellung einer weiteren bevorzugten Ausführungsform der Erfindung zur Ermittlung eines zweidimensionalen Konzentrationsprofiles.

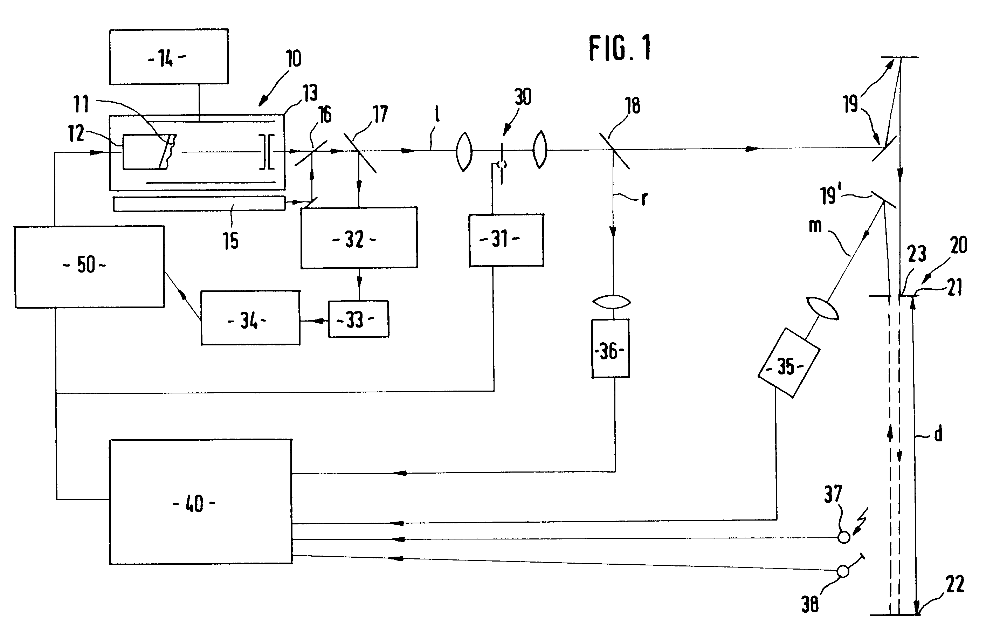

In Fig. 1 ist mit der Bezugsziffer 10 eine Laser-Emittereinheit bezeichnet, in deren Gehäuse 13 ein $^{13}CO_2$-Laser angeordnet ist. Der eine Spiegel/Gitter 11 des Lasers ist über einen Piezoantrieb 12 verstellbar, so daß die Resonanz auf eine der dem verwendeten Gas eigene Wellenlänge einstellbar ist.

Der Laser wird bei ca. 8°C betrieben und weist eine Versorgung 14 auf. Das Gehäuse 13 umfaßt zur Beibehaltung der Temperatur einen Isolationsmantel, der nur für den Laserstrahl eine kleine Öffnung aufweist, wodurch eine Kondensation der Optik verhindert wird. Der gesamte Laser ist vorzugsweise in einem Metallgehäuse untergebracht, das die Anordnung gegen elektrische bzw. elektromagnetische Störungen abschirmt.

Weiterhin ist in diesem Gehäuse ein Justier-He-Ne-Laser untergebracht, der mittels einer Zink-Selenid-Scheibe 16 in den $CO_2$-Laserstrahl kolinear eingeblendet wird.

Ein Bruchteil der Strahlungsenergie des Ausgangslaserstrahls 1 wird durch einen teildurchlässigen Spiegel 17 und einen Spektrum-Analysator 32 (Gitter) auf einen Hilfsdetektor 33 zur Messung des Spektrums des Laserstrahls 1 geleitet. Das Ausgangssignal des Detektors 33 gelangt auf eine Stabilisierschaltung 34, über die eine Piezo-Steuerung 50 zur Ansteuerung des Piezo-Antriebes gesteuert wird. Durch diese Anordnung kann der Piezo-Antrieb 12 derart eingestellt werden, daß die erwünschten zwei Wellenlängen möglichst exakt eingestellt werden, wobei gleichzeitig durch ein leichtes "Verstimmen" der Spiegelanordnung eine Intensitätsregelung derart erfolgen kann, daß die Ausgangsintensität des Laserstrahls für beide eingestellten Wellenlängen zumindest in derselben Größenordnung liegt.

Das Hin- und Herschalten zwischen den beiden Wellenlängen $\lambda 1$ und $\lambda 2$ geschieht mit einer relativ hohen Frequenz (ca. 2000 Hz), mit der auch ein Chopper 30 über seine Steuerung 31 synchronisiert ist. Die Steuerung ist hierbei derart, daß ein voller Zyklus insgesamt drei Zeitabschnitte umfaßt, wobei während des ersten Zeitabschnittes der Laserstrahl 1 mit seiner ersten Wellenlänge $\lambda 1$, während des zweiten Zeitabschnittes mit seiner Wellenlänge $\lambda 2$ strahlt und während des dritten Zeitabschnittes der Laserstrahl durch den Chopper 30 unterbrochen wird.

Dem Chopper 30 nachgeordnet ist ein weiterer teildurchlässiger Spiegel 18, der einen Teil der Energie als Referenzstrahl r auf einen Detektor 36 lenkt. Die restliche Energie des Laserstrahls 1 gelangt über zwei Spiegel 19 durch eine Öffnung 23 in einem ersten Spiegel 21, trifft am Ende der Meßstrecke auf einen zweiten Spiegel 22 und gelangt dann (nach einigen weiteren Reflektionen zwischen den beiden Spiegel 21 und 22) durch die Öffnung 23 im ersten Spiegel 21 und einen weiteren Spiegel 19′ in einen weiteren Detektor 35. Die wirksame Länge der Meßstrecke 20 errechnet sich somit aus dem Abstand d zwischen den beiden Spiegeln 21 und 22 und der Anzahl der hin- und herlaufenden Strahlen zwischen den Spiegeln.

In der Meßstrecke 20 bzw. in deren Nähe (z.B. im Kamin), sind ein Temperaturfühler 37 (z.B. ein Strahlungspyrometer) und ein Druckfühler 38 vorgesehen, deren Ausgänge ebenso wie die Ausgänge der Detektoren 35 und 36 auf eine Auswerteinheit 40 geführt sind. Die Auswerteinheit 40 ist darüber hinaus mit der Piezosteuerung 50 und der Choppersteuerung 31 verbunden.

Als Detektoren 35, 36 werden bei der hier gezeigten Ausführungsform der Erfindung pyroelektrische Detektoren verwendet, so daß der hier beschriebene Chopper 30 notwendig ist.

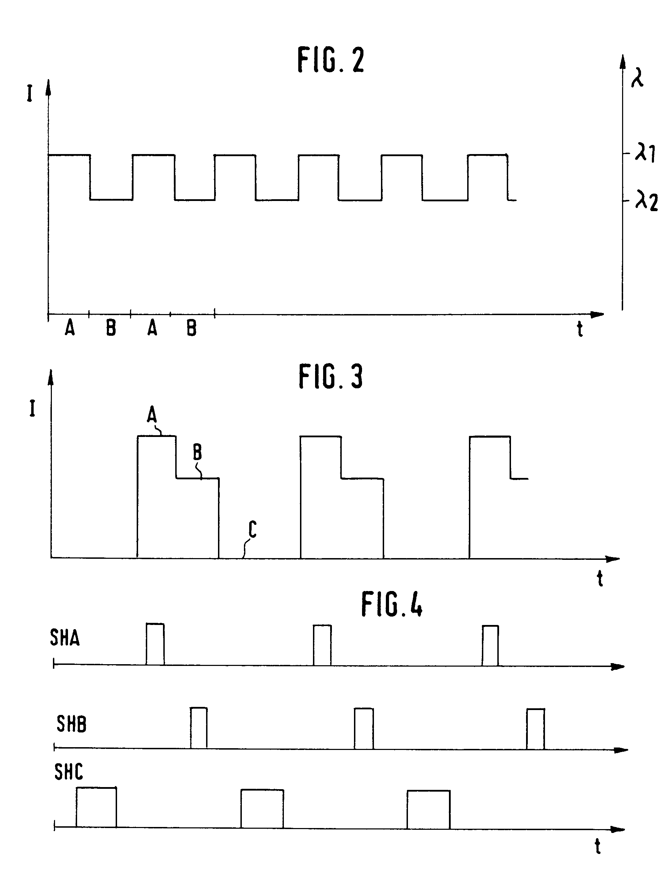

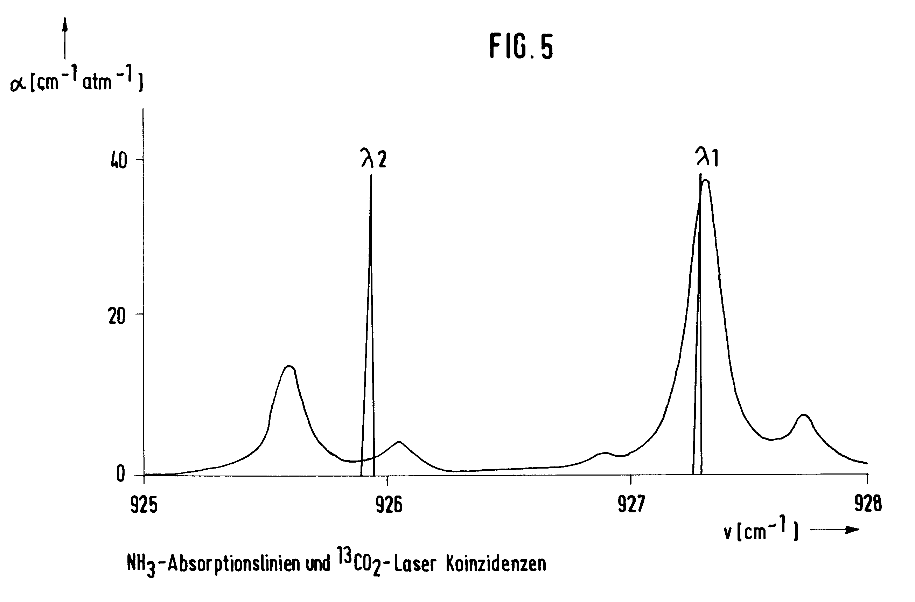

Im folgenden wird die Funktion der in Fig. 1 gezeigten Anordnung anhand der Fig. 2 bis 7 näher erläutert.

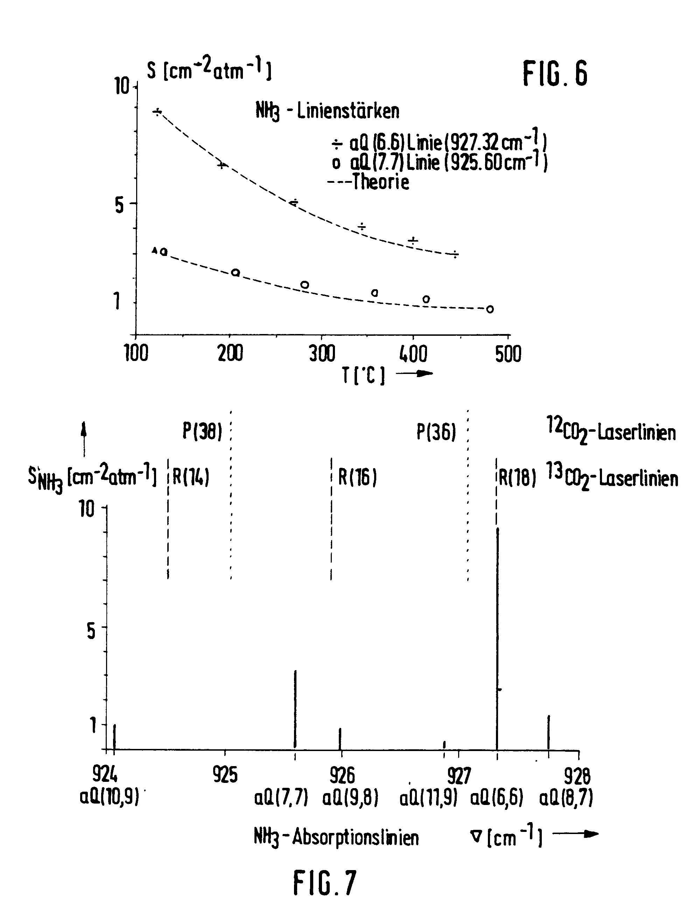

Der Spiegel/Gitter 11 wird vom Piezoantrieb 12 derart hin- und hergestellt, daß der $CO_2$-Laser auf seinen Linien R(16) und R(18) hin- und herspringt (Fig. 7), also zwischen den beiden Wellenlängen $\lambda 1$ und $\lambda 2$ (siehe Fig. 2) rechteckförmig hüpft. Hierbei wird der Piezoantrieb 12 z.B. durch Einstellung einer Offsetspannung so "verstimmt", daß die Ausgangsintensität (siehe Fig. 2, linke Achse) für beide Wellenlängen im wesentlichen in der gleichen Größenordnung liegt.

Durch den Chopper 30 wird der Laserstrahl 1 synchronisiert zum Umschalten seiner Wellenlängen unterbrochen, so daß das in Fig. 3 gezeigte Intensitätsmuster über die Zeit entsteht, wobei der Bereich A einen Laserstrahl mit der Wellenlänge $\lambda 1$, der Bereich B einen Strahl mit der Wellenlänge $\lambda 2$ und der Bereich C einen Bereich darstellen, in welchem der Laserstrahl 1 durch den Chopper 30 unterbrochen ist. An den Ausgängen der Detektoren 35 und 36 entstehen dann Signale, deren Zeitverlauf demjenigen nach Fig. 3 entspricht, wobei der Gleichstrom-Mittelwert der Detektor-Ausgangssignale bei Null liegt.

In der Auswerteinheit 40 werden die Ausgangssignale der Detektoren 35 und 36 über Sample + Hold-Schaltungen, wie in Fig. 4 gezeigt, abgetastet, so daß nach einem vollständigen Zyklus A-C insgesamt sechs Werte gespeichert sind. AI, BI, CI (Ausgangswerte A-C des Detektors 35) und AII, BII, CII (Ausgangswerte des Detektors 36). Die aufbereiteten Signale A sind also bei der Wellenlänge $\lambda 1$ (Absorptionsmaximum von NH3) gewonnen, die Werte B bei der Wellenlänge $\lambda 2$ (Absorptionsminimum), während die Werte C den optischen Nullpunkt darstellen.

In der Auswerteinheit 40 wird nun aus diesen sechs Werten die Extinktion E nach folgender Gleichung berechnet:

$$E = -\log \frac{\left(\dfrac{AI - CI}{BI - CI}\right)}{\left(\dfrac{AII - CII}{BII - CII}\right)} \; ;$$

Wenn nun Druck und Temperatur des Gases in der Meßstrecke bekannt sind, so kann daraus die Konzentration K des untersuchten Gases direkt hergeleitet werden.

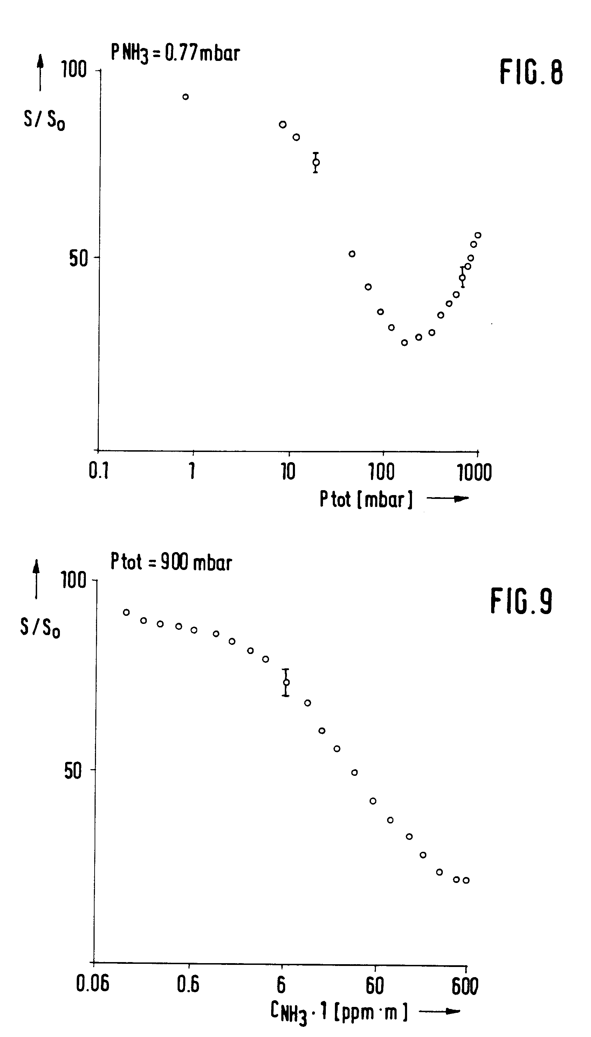

Da die Absorption nur bereichsweise linear von Druck und Temperatur des Gases in der Meßstrecke abhängig sind, weist die Auswerteinheit 40 gespeicherte Korrekturtabellen auf, die Korrekturwerte gemäß Fig. 8 und 9 beinhalten, welche dann entsprechend den Ausgangssignalen der Sensoren 37, 38 ausgewählt und zur Korrektur der Meßergebnisse verwendet werden.

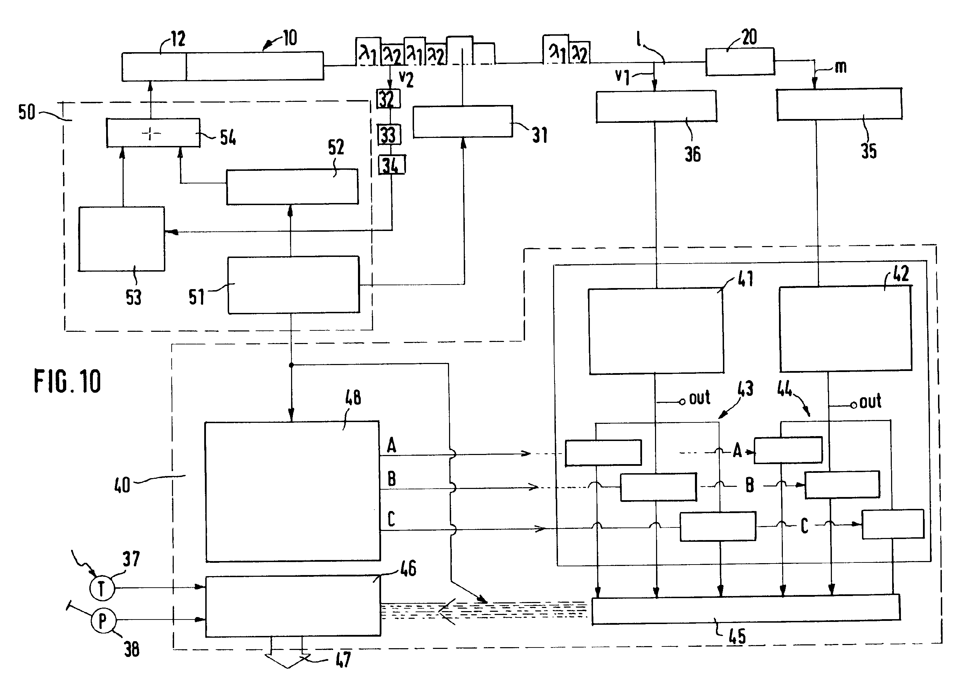

In Fig. 10 ist die Anordnung nochmals schematisiert dargestellt. Aus dieser Darstellung geht hervor, daß die Piezosteuerung 50 zur Steuerung des Piezoantriebs 12 der Laser-Emittereinheit 10 einen Frequenzgenerator 51 umfaßt, der den Zyklus zum Hin- und Herschalten der Wellenlänge und zum Unterbrechen des Lasrausgangsstrahls 1 bestimmt. Der Frequenzgenerator 51 ist darum ausgangsseitig zum einen mit der Choppersteuerung 31, zum anderen mit einem Modulator 52 verbunden, dessen Ausgangssignal auf den einen Eingang eines Summierverstärkers/Treibers 54 geführt ist, auf dessen anderem Eingang eine Offsetschaltung 53 mit ihrem Ausgang liegt. Diese Offsetschaltung 53 wird durch die Stabilisierung 34 gesteuert. Zur Synchronisierung der Auswertschaltung 40 ist weiterhin ein Taktsignal aus dem Frequenzgenerator 51 mit einem entsprechenden Eingang einer Taktsteuerung 48 der Auswerteinheit 40 verbunden.

Die Taktsteuerung 48 sendet Taktsignale A, B und C zu Sample + Hold-Schaltungen 43 und 44, die an Ausgängen von Analog-Verarbeitungsschaltungen 41 und 42 liegen, welche die Ausgangssignale der pyroelektrischen Detektoren 35 und 36 vorverarbeiten. Diese Vorverarbeitung besteht insbesondere in einem Abkoppeln der Offsetspannung, dem Ausfiltern von (HF-) Störungen und dem Verstärken der Signale.

Die in den Sample + Hold-Schaltungen 43 und 44 gespeicherten Detektorwerte A, B und C werden über einen A/D-Wandler 45 digitalisiert und zusammen mit einem Taktsignal bzw. Trigger (aus dem Frequenzgenerator 51) einer Rechnerschaltung 46 (z.B. einem Minicomputer) zugeführt. Weiterhin werden der Rechnerschaltung 46 (digitalisierte) Ausgangssignale der Meßfühler 37 und 38 für Temperatur und Druck in der Meßstrecke zugeführt. In der Rechnerschaltung 46 werden die in den Sample + Hold-Schaltungen 43 und 44 gespeicherten Signale bei jedem Zyklus gemäß der oben angegebenen Vorschrift verrechnet, gegebenenfalls gespeichert und über einen Ausgabeport 47 ausgegeben.

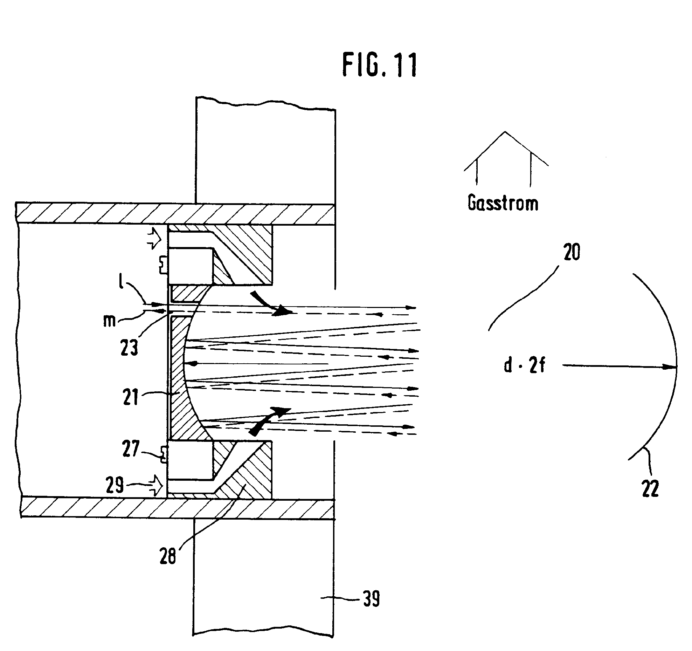

Im folgenden wird eine bevorzugte Ausführungsform der Erfindung in bezug auf die Ausgestaltung der Meßstrecke anhand der Fig. 11 näher beschrieben.

Wie in Fig. 11 gezeigt, sind die bereits anhand der Fig. 1 erläuterten Spiegel 21 und 22 als Hohlspiegel ausgebildet, die jeweils über Justiereinrichtungen 27 in einem Gehäuse 28 sitzen. Die Gehäuse 28 der beiden Spiegel 21 und 22 sind in einander gegenüberliegenden Wänden eines Kamins 39 montiert, so daß bei geeigneter Einstellung der Spiegel über die Justierelemente 27 ein Laserstrahl 1, der durch ein Loch 23 im Spiegel 21 auf den gegenüberliegenden Spiegel 22 gerichtet ist, von diesem reflektiert wieder auf den Spiegel 21 zurück und so mehrmals hin- und hergespiegelt wird, bis er schließlich als Meßstrahl m durch das Loch 23 im Spiegel 21 wieder austritt. Vorzugsweise sind hierbei die Spiegel 21 und 22 justierbar in einer Entfernung d voneinander angeordnet, welche der zweifachen Brennweite f der Spiegel entspricht.

Im Gehäuse 28 sind (ringförmige) Spülluftkanäle 29 vorgesehen, durch welche Spülgas so (in Pfeilrichtung) in den Kamin eingebracht wird, daß die Spiegeloberflächen vor Kontamination, z.B. durch Feststoffe in den Rauchgasen geschützt sind.

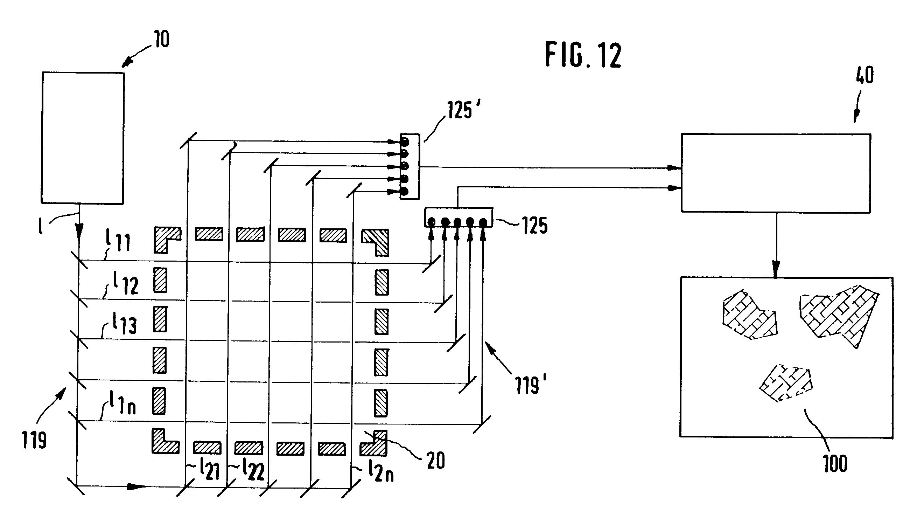

Bei einer weiteren, in Fig. 12 gezeigten bevorzugten Ausführungsform der Erfindung wird das oben bereits im Detail beschriebene Meßprinzip verwendet, wobei jedoch der Laserausgangsstrahl 1 über Spiegelanordnungen 119, 119′ in eine matrixartige Anordnung von Einzel-Meßstrahlen zerlegt wird, die nach Durchlaufen der Meßstrecken 20 jeweils auf Gruppen von Detektoren 125, 125' justiert sind, deren Ausgangssignale dann wieder einer Auswerteinheit 40 zugeführt werden. Die Auswerteinheit 40 bildet aus den Meßwerten eine tomogramm-artige Darstellung, die als Ausdruck 100 ausgegeben werden kann, und dann ein zweidimensionales Konzentrationtsprofil über den Querschnitt des Kamins darstellt.

Selbstverständlich sind bei dieser Anordnung auch die anhand der Fig. 1 und 10 bereits erläuterten Bauteile (Analysator, Chopper, usw.) vorgesehen.

Wenn man die Erfindung auf die Analyse der Ammoniak-Konzentration in Rauchgasen anwendet, so kann mit der hier gezeigten Erfindung eine überraschend genaue und relativ einfache Analyse der Rauchgase in situ stattfinden. Hierbei ergibt sich ein wesentlicher Vorteil dadurch, daß jeder Meßwert aus drei zeitlich sehr kurz hintereinander gewonnenen Einzelwerten herleitbar ist, was wiederum dazu führt, daß Turbulenzen im Rauchgas oder auch Vibrationen (Gebäudeschwingungen) am Aufstellort das Meßergebnis nicht beeinflusen, da die Änderungsgeschwindigkeiten von Druck und Strömung bei den Turbulenzen bzw. die oberen Grenzfrequenzen bei Gebäudeschwingungen niedriger liegen, als die Meßgeschwindigkeit des Systems. In jedem Fall weist aber ein $CO_2$-Laser eine sehr hohe Leistung auf, so daß besonders lange Meßstrecken aufgebaut und darum hohe Empfindlichkeiten erzielt werden können.

## Patentansprüche

1. System zur Messung der Ammoniak-Konzentration, mit einer Laser-Emittereinheit (10) zum Erzeugen eines Ausgangsstrahls (1), ersten optischen Mitteln (19) zum Leiten des Ausgangsstrahls (1) in eine Meßstrecke (20), in der sich zu analysierendes Gas befindet, zweiten optischen Mitteln (19') zum Leiten des aus der Meßstrecke (20) austretenden Meßstrahls (m) in ein Meßorgan (35) zur Messung der Intensität (A,B) des Meßstrahls (m), mit einer Auswertschaltung (40) zum Verarbeiten und Auswerten von Ausgangssignalen des Meßorgans (35) und zum Anzeigen/Registrieren von Meßwerten, wobei die Laser-Emittereinheit (10) einen abstimmbaren $CO_2$-Laser umfaßt, dessen Ausgangsstrahl-Wellenlänge über eine Steuerung (50) bzw. einen verstellbaren Spiegel (11), ein Gitter oder dergleichen zwischen mindestens zwei Werten ($\lambda 1$, $\lambda 2$) zyklisch sich wiederholend hin- und herschaltbar ist, wobei eine der Wellenlängen ($\lambda 1$) einem Absorptionsmaximum und eine ($\lambda 2$) einem Absorptionsminimum an Ammoniak entspricht und wobei die Auswertschaltung (40) derart ausgebildet ist, daß aus dem Verhältnis AI/BI die Extinktion (E) und daraus die Konzentration (K) von Ammoniak hergeleitet, und als Ausgangswerte angezeigt/registriert werden, wobei AI und BI die Intensitäten bei dem Wellenlängen $\lambda 1$ bzw. $\lambda 2$ nach Durchlaufen der Meßstrecke (20) sind,
   **dadurch gekennzeichnet**,
   daß die Auswertschaltung (40) Sample & Hold-Schaltungen (43, 44) umfaßt, die mit der Steuerung (50) sowie gegebenenfalls einem Chopper (30) zum Unterbrechen des Ausgangsstrahls (1) synchronisiert sind und die Ausgangssignale des Meßorgans (35) über definierte Zeitintervalle nach Abklingen von Einschwingvorgängen abtasten.

2. System nach Anspruch 1,
   **dadurch gekennzeichnet**,
   daß dritte, optische Mittel (18) zum Leiten eines Teils der Energie des Ausgangstrahles (1) in ein weiteres, mit der Auswertschaltung (40) verbundenes Meßorgan (36) vorgesehen sind, um die Intensität des Ausgangsstrahles (1) zu messen, und daß die Auswertschaltung derart ausgebildet ist, daß das Intensitätsverhältnis (AI/BI) nach Durchlaufen der Meßstrecke (20) auf das Intensitätsverhältnis (AII/BII) vor Durchlaufen der Meßstrecke (20) normiert wird.

3. System nach einem der Ansprüche 1 oder 2,
   **dadurch gekennzeichnet**,
   daß die Meßorgane (35, 36) pyroelektrische Detektoren umfassen, und daß der mit dem Hin- und Herschalten des Lasers synchronisierte Chopper (30) derart angeordnet ist, daß die Detektoren (35, 36) nach dem Empfang von Strahlen der beiden Wellenlängen ($\lambda 1$, $\lambda 2$) im wesentlichen vollständig für eine kurze Zeitdauer abgeblendet werden.

4. System nach einem der Ansprüche 1 bis 3,
   **dadurch gekennzeichnet**,
   daß der Spiegel/Gitter (11) der Laser-Emittereinheit (10) einen Piezo-Antrieb (12) umfaßt, der vorzugsweise einen vom Umschalthub zwischen den Wellenlängen ($\lambda 1$, $\lambda 2$) unabhängig einstellbaren Offset-Ein-

stellbetrag aufweist.

5. System nach Anspruch 4,
**dadurch gekennzeichnet,**
daß der Laser-Emittereinheit (10) eine Laserstrahl-Analysatoreinheit (17, 32, 33) zum Feststellen des Emissionsspektrums nachgeschaltet ist, deren Ausgangssignale über eine Stabilisierschaltung (34) auf eine Steuer/Treiberschaltung (50) für den Piezo-Antrieb (12) zur Regelung und Überwachung der Emissions-Wellenlängen und -intensität geführt sind.

6. System nach einem der Ansprüche 1 bis 5,
**dadurch gekennzeichnet,**
daß die Laser-Emittereinheit (10) einen weiteren, sichtbares Licht ausstrahlenden (HeNe-) Laser (15) umfaßt, dessen Ausgangsstrahl zur Justierung des System kolinear zum Ausgangsstrahl (1) des ($CO_2$-) Lasers eingeblendet wird.

7. System nach einem der Ansprüche 1 bis 6,
**dadurch gekennzeichnet,**
daß die Meßstrecke (20) ein Paar von Spiegeln (21, 22) umfaßt, die derart einander gegenüberliegend angeordnet sind, daß ein auf einen Spiegel (22) gerichteter Strahl mehrmals zwischen den Spiegeln, die Meßstrecke durchlaufend, hin- und herreflektiert wird, bis er aus der Meßstrecke ausgeblendet und dem Meßorgan (35) zugeführt wird.

8. System nach Anspruch 7,
**dadurch gekennzeichnet,**
daß die Spiegel (21, 22) Hohlspiegel umfassen, deren doppelte Brennweiten (f) der Meßstreckenlänge (d) entsprechen.

9. System nach einem der Ansprüche 1 bis 8,
**dadurch gekennzeichnet,**
daß in bzw. an der Meßstrecke (20) mit der Auswerteinheit (40) verbundene Drucksensoren (38) und/oder Temperatursensoren (37) vorgesehen sind, über deren Ausgangssignale die Meßwerte in der Auswerteinheit (40) korrigierbar sind.

10. System nach einem der Ansprüche 1 bis 9,
**dadurch gekennzeichnet,**
daß die ersten und zweiten optischen Mittel (119, 119') derart ausgebildet und angeordnet sind, daß die Meßstrecke (20) als Querschnitt eines vom zu analysieren den Gas durchströmten, insbesondere als Kamin ausgebildeten Kanals, und von einer Vielzahl von Ausgangsstrahlen ($1_{11}$ - $11_{1n}$; $1_{21}$ - $1_{2n'}$) matrixförmig durchlaufen wird, daß ein mit der Auswertschaltung (40) verbundenes Paar von Meßorgan-Gruppen (125, 125') zur Intenistätsmessung der Ausgangsstrahlen vorgesehen ist, und daß die Auswertschaltung (40) derart ausgebildet ist, daß ein zweidimensionales Meßwertprofil registrier- und anzeigbar ist.

11. System nach Anspruch 1,
**dadurch gekennzeichnet,**
daß die Ausgangsintensitäten des Ausgangsstrahles (1) für beide Ausgangs-Wellenlängen ($\lambda 1$, $\lambda 2$) im wesentlichen gleich groß eingestellt sind.

12. System nach einem der vorhergehenden Ansprüche,
**dadurch gekennzeichnet,**
daß die Steuerung (50) mit einer Frequenz von über 100 Hz, vorzugsweise über 1000 Hz zwischen den beiden Wellenlängen ($\lambda 1$, $\lambda 2$) hin- und herschaltet.

13. System nach einem der vorhergehenden Ansprüche,
**dadurch gekennzeichnet,**
daß die Auswertschaltung (40) die Meßergebnisse nach jedem Zyklus unmittelbar bestimmt

14. Verwendung des Systems nach einem der Ansprüche 1 bis 13 zur Überwachung von Abgasen.

15. Verwendung nach Anspruch 14 zur Messung der Ammoniak-Konzentration in Rauchgasen und Industrie-

EP 0 318 752 B1

abgasen, wobei die Laser-Emittereinheit (10) einen $^{13}CO_2$-Laser umfaßt.

**Claims**

1. System for measuring the concentration of ammonia, with a laser emitter unit (10) for generating an output beam (1), first optical means (19) for guiding the output beam (1) into a measurement section (20) in which there is gas which is to be analyzed, second optical means (19') for guiding the measurement beam (m) emerging from the measurement section (20) into a measurement element (35) for the purpose of measuring the intensity (A, B) of the measurement beam (m), with an evaluation circuit (40) for processing and evaluating output signals from the measurement element (35) and for displaying/recording measurement values, the laser emitter unit (10) including a tunable $CO_2$ laser the output beam wavelength of which is capable of being switched alternately, in a repetitive cycle, between two or more values ($\lambda$1, $\lambda$2) by means of a controller (50) or adjustable mirror (11), a grating or similar device, one of the wavelengths ($\lambda$1) corresponding to an ammonia absorption maximum and one ($\lambda$2) to an absorption minimum and the evaluation circuit (40) being constructed so that the extinction (E) and, from this, the concentration (K) of ammonia are derived from the ratio AI/BI and displayed/recorded as output values, AI and BI being the intensities for the wavelengths $\lambda$1 and $\lambda$2 respectively following passage through the measurement section (20), characterized in that the evaluation circuit (40) includes sample-and-hold circuits (43, 44) which are synchronized with the controller (50) and, if necessary, with a chopper (30) for interrupting the output beam (1) and which sample the output signals from the measurement element (35) over defined intervals of time following the decay of initial transients.

2. System according to Claim 1, characterized in that there are third optical means (18) for guiding a portion of the energy of the output beam (1) into a further measurement element (36), connected to the evaluation circuit (40), for the purpose of measuring the intensity of the output beam (1) and in that the evaluation circuit is constructed so that the intensity ratio (AI/BI) following passage through the measurement section (20) is normalized to the intensity ratio (AII/BII) before passage through the measurement section (20).

3. System according to either of Claims 1 or 2, characterized in that the measurement elements (35, 36) include pyroelectric detectors and in that the chopper (30) which is synchronized with the alternating switching of the laser is arranged so that, following reception of beams of both wavelengths ($\lambda$1, $\lambda$2), the detectors (35, 36) are essentially fully closed for a short period of time.

4. System according to any one of Claims 1 to 3, characterized in that the mirror/grating (11) of the laser emitter unit (10) includes a piezoelectric drive (12) which preferably has an offset setting value which is capable of being adjusted independently of the changeover range between the wavelengths ($\lambda$1, $\lambda$2).

5. System according to Claim 4, characterized in that there is connected in series after the laser emitter unit (10) a laser beam analyzer unit (17, 32, 33) for determining the emission spectrum, the output signals of which are passed through a stabilizing circuit (34) to a control/driver circuit (50) for the piezoelectric drive (12) for the purpose of controlling and monitoring the emission wavelengths and intensity.

6. System according to any one of Claims 1 to 5, characterized in that the laser emitter unit (10) includes a further (HeNe) laser (15), emitting visible light, the output beam of which is injected collinearly with the output beam (1) of the ($CO_2$) laser for the purpose of adjusting the system.

7. System according to any one of Claims 1 to 6, characterized in that the measurement section (20) includes a pair of mirrors (21, 22) which are arranged opposite each other in such a way that a beam directed on to one mirror (22) is reflected back and forth several times between the mirrors, passing through the measurement section, until it is removed from the measurement section and delivered to the measurement element (35).

8. System according to Claim 7, characterized in that the mirrors (21, 22) include concave mirrors having focal lengths (f) which are equal to half the measurement section length (d).

9. System according to any one of Claims 1 to 8, characterized in that in or on the measurement section (20) there are pressure sensors (38) and/or temperature sensors (37), connected to the evaluation unit (40), the output signals of which enable the measurement values to be corrected in the evaluation unit

EP 0 318 752 B1

(40).

10. System according to any one of Claims 1 to 9, characterized in that the first and second optical means (119, 119′) are constructed and arranged so that the measurement section (20) is passed through as a cross-section of a channel, particularly one constructed as a chimney swept by the gas to be analyzed, by a multiplicity of output beams ($1_{11}$ - $1_{1n}$; $1_{21}$ - $1_{2n}$) in matrix formation, in that there is a pair of measurement element groups (125, 125′), connected to the evaluation circuit (40), for measuring the intensity of the output beams and in that the evaluation circuit (40) is constructed so that a two-dimensional measurement value profile can be recorded and displayed.

11. System according to Claim 1, characterized in that the output intensities of the output beam (1) are set to essentially equal values for both output wavelengths ($\lambda 1$, $\lambda 2$).

12. System according to any one of the preceding Claims, characterized in that the controller (50) switches alternately between the two wavelengths ($\lambda 1$, $\lambda 2$) at a frequency of over 100 Hz, preferably over 1000 Hz.

13. System according to any one of the preceding Claims, characterized in that the evaluation circuit (40) determines the measurement results directly after each cycle.

14. Application of the system according to any one of Claims 1 to 13 for the purpose of monitoring waste gases.

15. Application according to Claim 14 for the purpose of measuring the concentration of ammonia in flue gases and industrial waste gases, the laser emitter unit (10) including a $^{13}CO_2$ laser.

**Revendications**

1. Dispositif pour la mesure d'une concentration en ammoniac, comprenant une unité d'émission laser (10) pour produire un faisceau de sortie (1), des premiers moyens optiques (19) pour guider le faisceau de sortie (1) dans un intervalle de mesure (20) dans lequel se trouve le gaz à analyser, des seconds moyens optiques (19′) pour guider le faisceau de mesure (m) sortant de l'intervalle de mesure (20) dans un organe de mesure (35) pour mesurer l'intensité (A, B) du faisceau de mesure (m), ainsi qu'un circuit d'exploitation (40) pour le traitement et l'exploitation des signaux de sortie de l'organe de mesure (35) et pour l'affichage/enregistrement des valeurs de mesure, l'unité d'émission laser (10) comprenant un laser au $CO_2$ accordable, dont la longueur d'ondes du faisceau de sortie peut être augmentée ou diminuée, de façon cyclique et répétitive, entre au moins deux valeurs ($\lambda 1$, $\lambda 2$) au moyen d'une commande (50) et d'un miroir réglable (11), d'un réseau ou analogue, l'une des longueurs d'ondes ($\lambda 1$) correspondant à un maximum d'absorption et l'autre ($\lambda 2$) à un minimum d'absorption en ammoniac, le circuit d'exploitation (40) étant réalisé de telle sorte que, à partir du rapport (AI/BI), l'extinction (E), et à partir de là la concentration (K) en ammoniac, est déduite et affichée/enregistrée comme valeur de sortie, AI et BI étant les intensités respectives des longueurs d'ondes $\lambda 1$ et $\lambda 2$ après traversée de l'intervalle de mesure (20), caractérisé en ce que le circuit d'exploitation (40) comprend des circuits échantillonneurs-bloqueurs (43, 44) qui sont synchronisés à la commande (50) et éventuellement à un hacheur (30) pour interrompre le faisceau de sortie (1), et qui analysent les signaux de sortie de l'organe de mesure (35) à des intervalles de temps définis après disparition de phénomènes transitoires.

2. Dispositif selon la revendication 1, caractérisé en ce que l'on prévoit des troisièmes moyens optiques (18) pour guider une partie de l'énergie du faisceau de sortie (1) dans un autre organe de mesure (36) relié au circuit d'exploitation (40), pour mesurer l'intensité du faisceau de sortie (1), et en ce que le circuit d'exploitation est réalisé de telle sorte que le rapport d'intensité (AI/BI) après traversée de l'intervalle de mesure (20) est normalisé relativement au rapport d'intensité (AII/BII) avant traversée de l'intervalle de mesure (20).

3. Dispositif selon l'une des revendications 1 et 2, caractérisé en ce que l'organe de mesure (35, 36) comprend des détecteurs pyroélectriques et en ce que le hacheur (30) synchronisé à l'augmentation et à la diminution du laser est réalisé de telle sorte que les détecteurs (35, 36) sont masqués pratiquement complètement pendant un court intervalle de temps après réception des faisceaux des deux longueurs d'ondes ($\lambda 1$, $\lambda 2$).

8

4. Dispositif selon l'une des revendications 1 à 3, caractérisé en ce que le miroir/réseau (11) de l'unité d'émission laser (10) comprend une commande piézo (12) qui comprend de préférence une valeur de réglage de décalage indépendante de la plage de variation des longueurs d'ondes ($\lambda 1$, $\lambda 2$).

5. Dispositif selon la revendication 4, caractérisé en ce qu'à la suite de l'unité d'émission laser (10) est disposé un analyseur de faisceau laser (17, 32,33) pour l'établissement du spectre d'émission, dont les signaux de sortie sont amenés, au moyen d'un circuit de stabilisation (34), à un circuit de commande/entraînement (50) de la commande piézo (12) pour régler et surveiller l'intensité et les longueurs d'ondes d'émission.

6. Dispositif selon l'une des revendications 1 à 5, caractérisé en ce que l'unité d'émission laser (10) comprend un autre laser (HeNe) (15) émettant de la lumière visible, dont le faisceau de sortie est superposé de façon colinéaire au faisceau de sortie (1) du laser ($CO_2$) pour l'ajustage du dispositif.

7. Dispositif selon l'une des revendications 1 à 6, caractérisé en ce que l'intervalle de mesure (20) comprend une paire de miroirs (21, 22) disposés l'un en face de l'autre de telle sorte qu'un faisceau dirigé sur l'un des miroirs (22) soit réfléchi plusieurs fois entre les miroirs, en traversant l'intervalle de mesure, jusqu'à ce qu'il quitte cet intervalle de mesure et soit guidé vers l'organe de mesure (35).

8. Dispositif selon la revendication 7, caractérisé en ce que les miroirs (21, 22) comprennent des miroirs concaves dont le double de leur distance focale (f) correspond à la longueur (d) de l'intervalle de mesure.

9. Dispositif selon l'une des revendications 1 à 8, caractérisé en ce que dans ou sur l'intervalle de mesure (20) sont prévus des détecteurs de pression (38) et/ou des détecteurs de température (37) reliés à l'unité d'exploitation (40), grâce aux signaux de sortie desquels les valeurs de mesure de l'unité d'exploitation (40) peuvent être corrigées.

10. Dispositif selon l'une des revendications 1 à 9, caractérisé en ce que les premiers et seconds moyens optiques (119, 119') sont réalisés et agencés de telle sorte que l'intervalle de mesure (20) est sous la forme d'une section d'un canal réalisé en particulier sous la forme d'une chambre, traversé par le gaz à analyser et traversé par une multiplicité de faisceaux de sortie ($1_{11} - 11_{1n}$ ; $1_{21} - 1_{2n'}$) formant matrice, en ce qu'il est prévu une paire de groupes d'organes de mesure (125, 125') reliés au circuit d'exploitation (40) pour mesurer l'intensité des faisceaux de sortie, et en ce que le circuit d'exploitation (40) est réalisé de telle sorte qu'une courbe de valeurs de mesure à deux dimensions peut être enregistrée et affichée.

11. Dispositif selon la revendication 1, caractérisé en que les intensités de sortie du faisceau de sortie (1) pour les deux longueurs d'ondes de sortie ($\lambda 1$, $\lambda 2$) sont réglées sensiblement à la même grandeur.

12. Dispositif selon l'une des revendications précédentes, caractérisé en ce que la commande (50) peut être augmentée ou diminuée entre les deux longueurs d'ondes ($\lambda 1$, $\lambda 2$) à une fréquence supérieure à 100 Hz, de préférence supérieure à 1000 Hz.

13. Dispositif selon l'une des revendications précédentes, caractérisé en ce que le circuit d'exploitation (40) détermine directement les résultats de mesure après chaque cycle.

14. Utilisation du dispositif selon l'une des revendications 1 à 13 pour la surveillance de gaz perdus.

15. Utilisation selon la revendication 14 pour la mesure de la concentration en ammoniac dans des gaz de combustion et dans des gaz perdus industriels, l'unité d'émission de laser (10) comprenant un laser au $^{13}CO_2$.

FIG. 1

EP 0 318 752 B1

# FIG. 2

# FIG. 3

# FIG.4

FIG. 5

NH$_3$-Absorptionslinien und $^{13}$CO$_2$-Laser Koinzidenzen

EP 0 318 752 B1

FIG. 6

S [cm⁻²atm⁻¹]

NH₃ - Linienstärken

÷ aQ (6.6) Linie (927.32 cm⁻¹)
o aQ (7.7) Linie (925.60 cm⁻¹)
---Theorie

T [°C]

FIG. 7

NH₃ - Absorptionslinien

$^{12}CO_2$-Laserlinien
$^{13}CO_2$-Laserlinien

$S_{NH_3}$ [cm⁻²atm⁻¹]

FIG. 8

$P_{NH_3} = 0.77\,mbar$

$S/S_0$

FIG. 9

$P_{tot} = 900\,mbar$

$S/S_0$

$C_{NH_3} \cdot 1\,[ppm \cdot m]$

14

FIG. 10

FIG. 11

Gasstrom

l

m

23

21

27

29

28

39

20

d · 2f

22

FIG. 12

EP 0 318 752 B1